# EUROPEAN PATENT SPECIFICATION

(11) **EP 3 676 071 B1**
(45) Date of publication and mention of the grant of the patent: **09.06.2021**
(21) Application number: 18780222.8
(22) Date of filing: 22.08.2018
(51) Int. Cl.: B29C 45/28, B29C 45/76

(54) **AUTONOMOUS ELECTRICAL EQUIPMENT FOR MATERIAL FLOW CONTROL**
AUTONOME ELEKTRISCHE AUSRÜSTUNG ZUR STEUERUNG EINES MATERIALFLUSSES
ÉQUIPEMENT ÉLECTRIQUE AUTONOME POUR COMMANDE DE FLUX DE MATIÈRE

(30) Priority: 29.08.2017 PT 2017110269
(43) Date of publication of application: 08.07.2020
(73) Proprietor: Yudo EU, S.A., 2431-904 Marinha Grande (PT)
(72) Inventor: VESTIA MILHINHOS, Francisco Jose, 2400-801 Leiria (PT)
(74) Representative: Ferreira, Maria Silvina
(86) International application number: PCT/IB2018/056357
(87) International publication number: WO 2019/043517

(56) References cited:
- EP-A1- 3 117 977
- US-A1- 2002 086 086
- BRAUN P: "PRAEZISE POSITIONIEREN", PLASTVERARBEITER, HUETHIG GMBH, HEIDELBERG, DE, 1 December 2005 (2005-12-01), page 38/39, XP001155127, ISSN: 0032-1338

## Description

### Technical field

This application describes an autonomous electrical equipment for controlling the flow of polymer material.

### Background

Hot runner systems are based on internal channels thermally controlled for processing thermoplastic materials, whose function is to maintain the material running therein in a liquid state, keeping the same temperature as the one in the chamber of the injection machine, from the injection machine nozzle up to the entry into the mould cavity.

Hot runner systems may or may not have flow control. Systems with flow control have countless advantages comparing to those without control, including, in most cases, and among others, the ability to prevent the need for plastic part feed sprues, the reduction in costs with trimmings, the possibility of working with finer thicknesses, without hampering the flow of plastic or lowering the injection pressure, and making the finished parts more cost-effective.

This is why nowadays there is an increasing demand for hot runner systems equipped with flow control, where the flow of input material into the mould can be controlled by a pneumatic hydraulic or electric system with an external controller. All these systems are sophisticated and recommended for the manufacture of parts with one or more injection points in the moulding zone. These systems enable the management of the material flow in the moulding zone, with the purpose of preventing the appearance of welding and flow seams, and often with the advantage of preventing feed sprues as well, thus creating the ideal conditions for the fluidity of the polymer during the injection operation regardless of the plastic used.

The hydraulic control has the advantage of being currently the most compact solution using a smaller cylinder although there are some drawbacks regarding its rising important energy and environmental impact: it requires the recycling of the used oil; it involves major heat transfers to the oil; the energy consumption of the pressure-generating equipment whether or not the device is being used (movement of the valve needle); the risk of oil leakage either in the working place or in the system, causing failure in the resistances used to heat the injection system. At the mould level, it implies the need for a large occupied space for the feed hoses passage, sometimes weakening the structure of the mould; and it does not allow precise control during opening and closing of the valve needle. The patent documents EP 3 117 977 A1 and US 2002/086086 A1 disclose electrical equipment for controlling the flow of polymer material, applicable in valve gate hot runner systems.

The pneumatic control has the advantage of using a similar cylinder to the hydraulic one, but a larger cylinder is required to achieve the same force. As an additional advantage, it prevents the leakage of liquids, since it is activated by air. The drawbacks are related to the rising importance of energy and environmental impact, as it obliges the recycling of used oil in the compressor, the consumption of energy by the compressor equipment, the need to install large air feed lines in the factory hall, with the risk of energy expenditures caused by air leakages along the above noticed feed lines. It is important to emphasize the large space occupied in the mould for the passage of feed hoses, or the impossibility of precise control in opening and closing the valve needle.

In contrast, electric control with an external controller has the advantage of being an environmentally-friendly equipment, being clean, and not creating wastes inherent to the working process as it only consumes a significant amount of energy when the valve needle is working. It takes a small space in the mould for the passage of the electrical cables, enables total control of the plastic flow into the moulding cavity. This technology allows the configuration of other functionalities, such as the multilayer application, the elimination of flow lines, the reduction of the closing force, the possibility of the program management for future reference or precise monitoring of the process, not available with the prior control modes. As drawbacks, this technology requires the use of an external controller, to be placed next to the injection machine, taking place in the factory hall where it often does not exist. Additionally, it implies a more complex adjustment process that requires the presence of a specialized technician for such a task.

### Summary

The present application describes an autonomous electrical equipment for controlling the flow of the polymer material, applicable in valve gate hot runner systems, characterized by comprising:
- a linear actuator, assembled inside the mould through a coupling mechanism, comprising:
   - a servomotor that comprises a rotor and an encoder;
   - an angular transmission box with a mechanical gear that comprises an assembly formed by a pair of bearings placed one at each end of an endless screw, through which the rotor of the servomotor is supported; said assembly connecting with the angular transmission box through a bolt screw, perpendicular to it, where a ring gear is connected, which is supported on the box by a pair of bearings; said ring gear comprising a ball nut mechanically coupled on the inside, which gauges movement to a ball screw which slides internally therein; said ball screw being connected to a connecting bush that promotes the mechanical fit with a control valve needle responsible for injecting the polymer material;
- a control unit, configured to establish communication with an injection machine, comprising:
   - a processing module configured to store and to run operation programs of said needle;
   - an actuation module configured:
      - to adapt the instructions issued by the processing module to the mould where the linear actuator is installed;
      - to drive the servomotor in accordance with the operating parameters contained in the instructions received.

In a particular mode of embodiment of the equipment, the coupling mechanism of the linear actuator to the mould is of a screw type.

In another particular mode of embodiment of the equipment, the control unit and the linear actuator are physically connected through a cable.

In another particular mode of embodiment of the equipment, the link between control unit and linear actuator comprises a data link and a feed link.

In another particular mode of embodiment of the equipment, the operating parameters of the servomotor are related to the rotation speed of the servomotor, opening and/or closing distance of the control valve or torque.

In another particular mode of embodiment of the equipment, the control unit comprises means for providing an interface with an operator.

In another particular mode of embodiment of the equipment, the control unit additionally comprises signalling means of the sound and/or lighting type.

### General description

The present application describes an autonomous electrical equipment for flow polymer material control into the moulding cavity, relying on a gate valve hot runner system for flow control.

The equipment is incorporated onto the surface of the mould through a coupling mechanism, controlling the displacement of the needle of the control valve in charge of the passage of the polymer material flow to the moulding cavity, forwards or backwards, with high stoppage accuracy. Said needle is driven by the control unit of the equipment, which operates a servomotor responsible for its movement based on the operating program to be run thereon.

High precision is achieved with this technology, along with a reduction in preparation times, flexibility during the injection process, high quality in surface finishing, in addition to the fact that this solution can be integrated into the structure of the mould, which represents an advantage also concerning the space for use. Consequently, this equipment represents an autonomous solution that waivers the need for an external operating controller, which means a reduction in the space required to install/operate it, compared to other known solutions.

Another advantage this equipment is its integration into the mould, through screw type coupling mechanisms, which reduces the overall size of the assembly, contrarily to what is shown in the state of the art. All this reflects a reduction in space and time for machining the boxes for the passage of pipes into the mould, as well as the advantage of being recommended for the pharmaceutical industry as it is a clean equipment and does not contaminate the air with harmful oils.

The equipment here presented has also an impact in terms of reduction in maintenance costs, as from the mechanical perspective, it only comprises a gearbox, contrary to what is presented in the state of the art which presents schemes comprising several mechanical transmissions. Besides the advantages in terms of hardware, the technology now presented also eliminates problems resulting from adjustment delays in the start-up process, due to the fact that the operation programs and initial tuning are loaded directly onto the control unit, without the aid of an external operations controller. The operating control algorithms are pre-set and adapted to each mould to be used. These algorithms enable that different operating parameters such as speeds and distances can be programmed both in the opening and in the closing of the needle of the control valve and torque of the servomotor.

The equipment is installed on the surface of the mould and comprises a control unit that has a processing module and an actuation module. The processing module is responsible for storing and running the operation programs in accordance with the specificity of each mould. The actuation module is responsible for adapting those programs to the moulds in each operating scenario, establishing the interface of the equipment with the mould, in accordance with what has been programmed. The equipment additionally comprises at least one angular linear actuator, comprised by a servomotor and an angular transmission box in order to transform the motor rotary movement into linear movement - ending in a ball screw internal coupling. The adoption of this type of coupling favours the reduction of friction despite of the speed of rotation, and also enables the intensification of the force applied to the control valve needle.

The at least one angular linear actuator and the control unit are physically connected by a cable, promoting the power feed of the servomotor and its programming in accordance with the operating program to be run on the processing module. This program may include, for example, the servomotor position and rotation configuration, which in turn will control the control valve needle linear displacement, which are linked, through a fitting, opening or closing the passage of the polymer material flow into the moulding cavity. The servomotor action is controlled by an encoder, which is configured to collect precise measures and speed and positioning controls, as programmed in the control unit.

The connection between the servomotor and the angular transmission box is provided through a mechanical gearing operating as follows: an assembly formed by a pair of bearings placed one at each end of an endless screw acts as a support to the servomotor rotor, promoting at the same time the connection to the angular transmission box through a bolt screw, perpendicular to it. This bolt screw is connected to a ring gear, which is supported on the box with two bearings, coupled to it at its extremities. Inside the above-mentioned ring gear, a ball nut is assembled allowing the movement of the ball screw, which then slides internally, being blocked, at one of its extremities, by a beam and bush assembly. The above referred ball screw is connected, at the opposite extremity, to a connecting bush that promotes the mechanical fitting with the control valve needle. This mechanical gearing thus enables controlled sliding of the actuation shaft whenever the ring gear turns.

Accordingly, when the servomotor transmits motion to the ball screw, it moves linearly forwards or backwards, according to the instruction given by the control unit. Then, the control valve needle allows the passage or the blockage of the polymer material flow into the cavity.

The developed technology is so an electro-mechanical equipment to be applied in valve gate hot runner systems, for incorporation into moulds for polymer material injection materials, in order to control the opening and closing of the control valve, enabling precise management of the material flow into the moulding cavity.

### Brief description of the drawings

For easier understanding of this application, some figures are attached to represent preferred embodiments, which, nevertheless, are not intended to limit the technique disclosed herein.

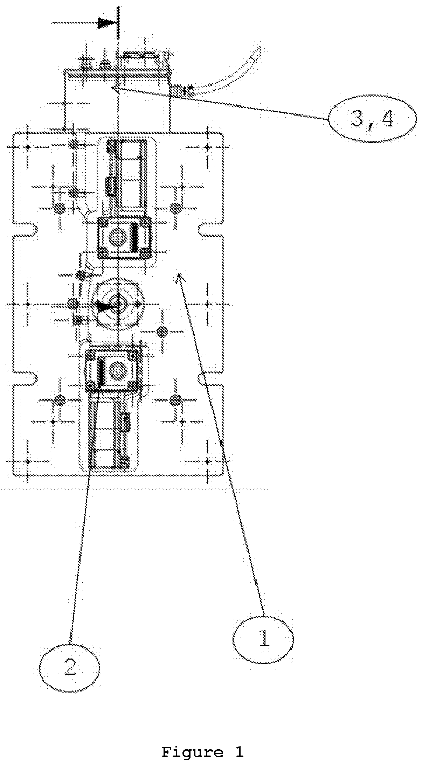

Figure 1 illustrates the application of the equipment in the mould, where the reference signs represent:
   1 - surface of the mould;
   2 - linear actuator;
   3 - control unit actuation module;
   4 - control unit processing module;

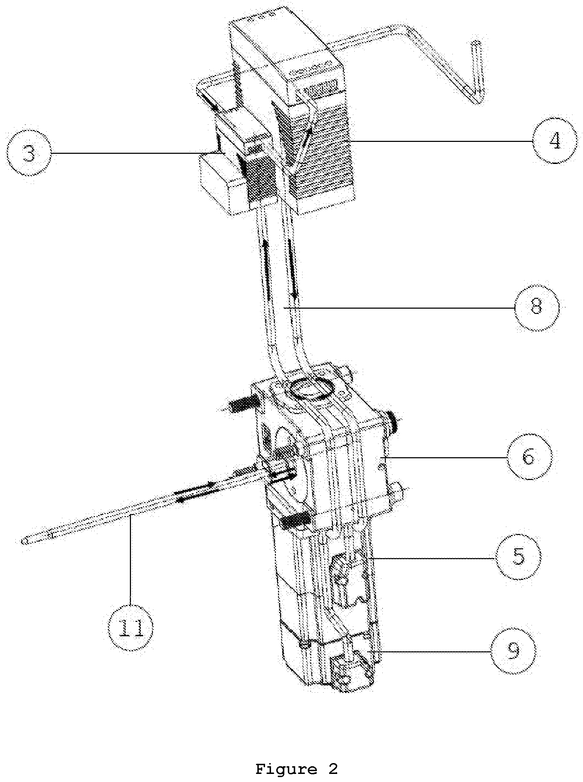

Figure 2 illustrates the equipment developed wherein the reference signs represent:
   3 - control unit actuation module;
   4 - control unit processing module;
   5 - linear actuator servomotor;
   6 - linear actuator angular transmission box;
   8 - physical connection cable;
   9 - servomotor encoder;
   11 - needle;

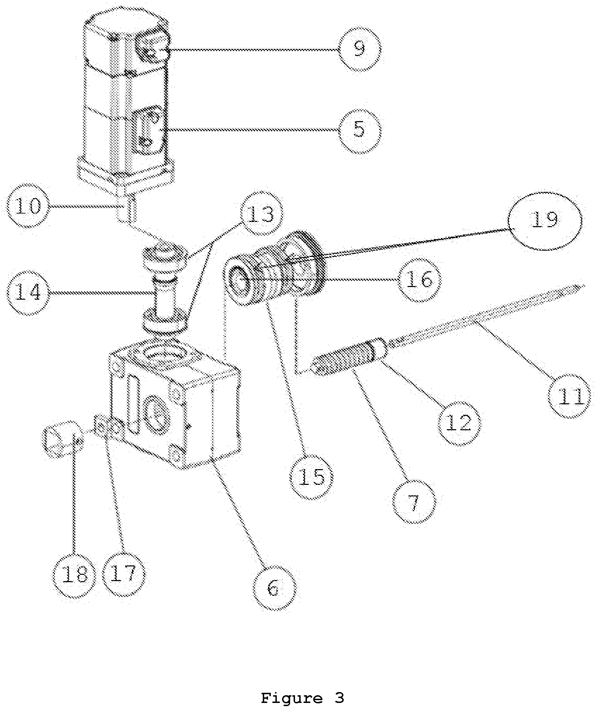

Figure 3 represents an exploded view of the equipment developed, wherein the reference signs represent:
   5 - linear actuator servomotor;
   6 - linear actuator angular transmission box;
   7 - ball screw;
   9 - servomotor encoder;
   10 - servomotor rotor;
   11 - control valve needle;
   12 - connecting bush;
   13 - pair of bearings;
   14 - "endless" screw;
   15 - ring gear;
   16 - ball nut;
   17 - beam;
   18 - bush;
   19 - ring gear bearings.

### Description of embodiments

Now, some executions of the present application will be described in detail with reference to the attached figures. However, they are not intended to limit the scope of this application.

The proposed equipment is comprised of an assembly of mechanical and electrical bodies represented in the above mentioned figures and assembled as described ahead.

The plate of the mould (1) acts as an housing for at least one linear actuator (2) and its corresponding servomotor (5), which is fastened inside using screws. The plate of the mould is also used to place the control unit on the outside, normally on the top of the mould. The servomotor (5) is fixed to the angular transmission box (6) with 4 screws through a rigid coupling to the endless screw (14), which in turn is cooperative with the rotor (10) of the servomotor. The ball nut (16) is fastened inside the ring (15), which is in contact with the box (6) through a pair of bearings (19), and wraps the ball screw (7) which remains stalled through the balls existing in the middle of the two mechanical bodies. This screw (7) has a beam (17) fastened by a pin placed transversally (not represented) at one of the extremities which prevents it from turning as it slides inside a axial bush (18), which is fastened to the box (6) with a threaded pin (not represented) . On the other extremity of the screw (7) there is a connecting bush (12) with a cross-sectional tear that enables the valve needle (11) to be fastened, being cooperative with the screw.

The control unit, placed on the outside of the mould (2), is responsible for the entire management of the equipment. Whenever the injection machine sends a command signal to the control unit, the control unit responds based on the program to be run in the processing module (4), and, accordingly, the actuation module (3) will operate the servomotor (5). The control unit additionally comprises signalling means, of the sound and/or lighting indication signals, and also interface means with the outside, for the interface devices connection with the operator.

The modification and setting of all these parameters the equipment to be adaptive to the different types of applications, sizes and shape of moulds.

This description is not restricted in any way to the embodiments presented in this document and any person with an average knowledge of the field may envisage numerous possibilities for its modification without moving away from the general idea as defined by the claims.

## Claims

1. An autonomous electrical equipment for controlling the flow of polymer material, applicable in valve gate hot runner systems, comprising:
- a linear actuator (2), installed inside the mould (1) through of a coupling mechanism, comprising:
- a servomotor (5) that comprises rotor (10) and an encoder (9);
- an angular transmission box (6);
- a control unit, configured to establish communication with an injection machine, comprising:
- a processing module (4) configured to store and to run operation programs of said needle;
- an actuation module (3) configured to:
- adapt the instructions issued by the processing module (4) to the mould (1) where the linear actuator (2) is installed;
- drive the servomotor in accordance with the operating parameters contained in the instructions received;
**characterised in that**
the angular transmission box (6) comprises a mechanical gearing that comprises an assembly formed by a pair of bearings (13) placed at each extremity of an endless screw (14), through which the servomotor rotor (10) is supported; said assembly connecting with the angular transmission box (6) through a bolt screw, perpendicular to it, where a ring gear (15) is connected, being supported on the box (6) by a pair of bearings (19); said ring gear (15) comprising a ball nut (16) mechanically coupled therein, which gauges the motion of a ball screw which slides inside; said ball screw (7) is connected to a connecting bush (12) which promotes mechanical fit with the control valve needle (11) responsible for injecting the polymer material.

2. The equipment, according to claim 1, wherein the coupling mechanism of the linear actuator (2) to the mould (1) is a screw.

3. The equipment, according to claims 1 and 2, wherein the control unit (3) and the linear actuator (2) are physically connected by a cable (8).

4. The equipment, according to claim 3, wherein the link between control unit (3) and linear actuator (2), comprises a data link and a feed link.

5. The equipment, according to any of the prior claims, wherein the operating parameters of the servomotor are related to the rotation speed of the servomotor (5), opening and/or closing distance of the control valve or torque.

6. The equipment, according to claim 1, wherein the control unit comprises means for providing an interface with an operator.

7. The equipment, according to claim 1, wherein the control unit further comprises sound and/or lighting type indication signals.

## Patentansprüche

1. Eine unabhängige elektrische Ausrüstung zur Durchflusssteuerung eines Polymerwerkstoffs zur Anwendung in Heißkanalsystemen mit Nadelverschluss, bestehend aus:
- einem in der Form (1) über einen Kupplungsmechanismus installierten Linearantrieb (2), der aus Folgendem besteht:
- Einem Servomotor (5), der einen Rotor (10) und einen Geber (9) aufweist;
- einem Winkelgetriebe-Gehäuse (6);
- einer Steuereinheit, die zur Herstellung der Verbindung mit einer Spritzgussmaschine konfiguriert ist, bestehend aus:
- einem zur Speicherung und Durchführung von Betriebsprogrammen der besagten Nadel konfigurierten Verarbeitungsmodul (4);
- einem Ansteuerungsmodul (3), welches konfiguriert ist, um:
- die vom Verarbeitungsmodul (4) an die Form (1) erteilten Anweisungen, an welcher der Linearantrieb (2) installiert ist, anzupassen;
- den Servomotor in Übereinstimmung mit den, in den Anweisungen enthaltenen Betriebsparametern zu steuern;
**dadurch gekennzeichnet, dass**
das Gehäuse des Winkelgetriebes (6) ein mechanischen Getriebe enthält, welches aus einer Baugruppe besteht, die von einem Lagerpaar (13) an jedem Ende einer Schnecke (14) gebildet wird, durch welches der Rotor (10) des Servomotors gestützt wird; die besagte Baugruppe wird mit dem Gehäuse des Winkelgetriebes (6) über eine senkrecht zu ihm stehende Bolzenschraube verbunden, wo sich ein Zahnkranz (15) befindet, der am Gehäuse (6) durch ein weiteres Lagerpaar (19) gelagert wird; wobei der besagte Zahnkranz (15) eine Kugelmutter (16) aufweist, die mechanisch mit ihm gekoppelt ist und die Bewegung eines innerhalb ihr gleitenden Kugelgewindetriebs kontrolliert, der besagte Kugelgewindetrieb (7) ist mit einer Verbindungshülse (12) verbunden, welche die mechanische Passung der Nadel des Steuerventils (11) darstellt, die für die Einspritzung des Polymerwerkstoffs verantwortlich ist.

2. Die Ausrüstung gemäß Anspruch 1, worin der Kupplungsmechanismus des Linearantriebs (2) zur Form (1) eine Schraube ist.

3. Die Ausrüstung gemäß den Ansprüchen 1 und 2, worin die Steuereinheit (3) und der Linearantrieb (2) physisch über ein Kabel (8) verbunden sind.

4. Die Ausrüstung gemäß Anspruch 3, worin die Verbindung zwischen der Steuereinheit (3) und dem Linearantrieb (2) aus einer Datenverbindung und einem Feed-Link besteht.

5. Die Ausrüstung gemäß einem der vorherigen Ansprüche, worin die Betriebsparameter des Servomotors mit der Drehzahl des Servomotors (5), dem Öffnungsweg und/oder Schließweg des Steuerventils oder dem Drehmoment verbunden sind.

6. Die Ausrüstung gemäß Anspruch 1, worin die Steuereinheit Mittel aufweist, um eine Schnittstelle mit dem Bediener bereitzustellen.

7. Die Ausrüstung gemäß Anspruch 1, worin die Steuereinheit weiterhin akustische und/oder leuchtende Anzeigesignale bereitstellt.

## Revendications

1. Équipement électrique autonome pour le contrôle de l'écoulement de matériau polymère, applicable dans des systèmes de canaux chauffants à corps de soupape, comprenant
- un actionneur linéaire (2), installé à l'intérieur du moule (1) par le biais d'un mécanisme de couplage, comprenant :
- un servomoteur (5) qui comprend un rotor (10) et un encodeur (9) ;
- une boîte de transmission angulaire (6) ;
- une unité de commande, configurée pour établir une communication avec une machine à injection, comprenant :
- un module de traitement (4) configuré pour stocker et exécuter des programmes de ladite aiguille ;
- un module d'actionnement (3) configuré pour :
- adapter les instructions émises par le module de traitement (4) au moule (1) où l'actionneur linéaire (2) est installé;
- commander le servomoteur en fonction des paramètres d'opération contenus dans les instructions reçues ;
**caractérisé en ce que**
la boîte de transmission angulaire (6) comprend un engrenage mécanique qui comprend un ensemble formé par une paire de paliers (13) placés à chaque extrémité d'une vis sans fin (14), par le biais de laquelle le rotor du servomoteur (10) est supporté ; ledit ensemble se connectant à la boîte de transmission angulaire (6) par le biais d'une vis de boulon, qui lui est perpendiculaire, où une couronne dentée (15) est connectée, étant supportée sur la boîte (6) par une paire de paliers (19) ; ladite couronne dentée (15) comprenant un écrou à billes (16) couplé mécaniquement à l'intérieur, qui mesure le mouvement d'une vis à billes qui coulisse à l'intérieur ; ladite vis à billes (7) est reliée à une douille de liaison (12) qui favorise l'ajustement mécanique avec l'aiguille de soupape de commande (11) responsable pour l'injection du matériau polymère.

2. Équipement selon la revendication 1, dans lequel le mécanisme de couplage de l'actionneur linéaire (2) au moule (1) est une vis.

3. Équipement selon les revendications 1 et 2, dans lequel l'unité de commande (3) et l'actionneur linéaire (2) sont physiquement connectés par un câble (8).

4. Équipement selon la revendication 3, dans lequel le lien entre l'unité de commande (3) et l'actionneur linéaire (2), comprend une liaison de données et une liaison d'alimentation.

5. Équipement selon l'une quelconque des revendications précédentes, dans lequel les paramètres de fonctionnement du servomoteur sont liés à la vitesse de rotation du servomoteur (5), à la distance d'ouverture et/ou de fermeture de la soupape de commande ou au couple.

6. Équipement selon la revendication 1, dans lequel l'unité de commande comprend des moyens pour la fourniture d'une interface avec un opérateur.

7. Équipement selon la revendication 1, dans lequel l'unité de commande comprend en outre des signaux d'indication de type son et/ou éclairage.
